# EUROPEAN PATENT SPECIFICATION

(11) **EP 2 884 742 B1**
(45) Date of publication and mention of the grant of the patent: **07.09.2016**
(21) Application number: 13306710.8
(22) Date of filing: 12.12.2013
(51) Int. Cl.: H04N 7/14, H04N 7/15, G06T 3/40

(54) **Process for increasing the resolution and the visual quality of video streams exchanged between users of a video conference service**
Verfahren zur Erhöhung der Auflösung und der visuellen Qualität von zwischen Benutzern eines Videokonferenzdienstes ausgetauschten Videoströmen
Procédé pour augmenter la résolution et la qualité visuelle de flux vidéo échangées entre utilisateurs d'un service de conférence vidéo

(43) Date of publication of application: 17.06.2015
(73) Proprietor: ALCATEL LUCENT, 92100 Boulogne-Billancourt (FR)
(72) Inventor: Alberi-Morel, Marie-Line, 91620 Nozay (FR); Kerboeuf, Sylvaine, 91620 Nozay (FR); Faucheux, Frédéric, 91620 Nozay (FR); Osmond, Marin, 35000 Rennes (FR); Laisnard, Cédric, 35000 Rennes (FR)
(74) Representative: Berthier, Karine

(56) References cited:
- US-A1- 2011 310 217
- BEVILACQUA MARCO ET AL: "Video super-resolution via sparse combinations of key-frame patches in a compression context", 2013 PICTURE CODING SYMPOSIUM (PCS), IEEE, 8 December 2013 (2013-12-08), pages 337-340, XP032566955, DOI: 10.1109/PCS.2013.6737752 [retrieved on 2014-02-11]
- STEPHANE PELLETIER ET AL: "High-Resolution Video Synthesis from Mixed-Resolution Video Based on the Estimate-and-Correct Method", 2005 SEVENTH IEEE WORKSHOPS ON APPLICATIONS OF COMPUTER VISION (WACV/MOTION'05) - 5-7 JAN. 2005 - BRECKENRIDGE, CO, USA, IEEE, LOS ALAMITOS, CALIF., USA, 1 January 2005 (2005-01-01), pages 172-177, XP031059086, ISBN: 978-0-7695-2271-5

## Description

The invention relates to a process for increasing the resolution and the visual quality of video streams that are exchanged between users connected through their terminals to a video conference service, such as a system, a server and terminals comprising means for implementing such a process.

During a video conference session, some users can send video streams encoded into a lower resolution format, as for example the CIF (for Common Intermediate Format) resolution format, whereas some other users can send video streams with a higher resolution format, such as the 4CIF format.

Such heterogeneity of the resolutions within the exchanged video streams may be due to the types of terminals through which users are connected to the video conference service. As for example, some users can be connected with laptops and other users can be connected with smartphones.

This heterogeneity may also be due to the access network through which the users are connected to the video conference service. In particular, if a user is connected through a less recent network such as a 3G (for Third Generation) mobile network, said user may encounter some limitation in terms of available bandwidth on the 3G up-link, so that the allowed bitrate would be limited and possibly turn on into a low resolution.

In particular, Media Resource Function (MRF) servers that are commonly implemented into Internet Protocol Multimedia Subsystem (IMS) architecture used by mobile telephone operators, such as the one provided by the Alcatel-Lucent® society, are able to implement a Host Based Media Resource (HBMR) function to manage exchanges of video streams between heterogeneous terminals and/or heterogeneous network accesses by providing different levels of resolution, especially into different display modes, such as the switching mode, wherein users receive a video stream comprising only the video stream sent by the loudest speaking user, or the tiled display mode, wherein users receive a tiled video stream comprising a mosaic of the video streams sent by all the users.

To do so, all users connected to a video conference service managed by such an IMS architecture send their video streams to a MRF server at a resolution and a bit rate that is negotiated between the terminals of each user and said server during their connection to the video conference service. Thus, as the MRF server knows the technical characteristics available at the side of each user, the MRF server is able to choose the suited display mode for each of said user, wherein the video stream of the loudest speaking user can be in particular highlighted, notably with increased resolution and visual quality.

In particular, for ensuring the resolution and visual quality management of the video streams, the MRF server can implement Super Resolution techniques, so that users can send video streams with a low resolution (i.e. a low number of pixels) and at a low bitrate, and the MRF server can thus require for increasing the resolution and the visual quality of a video stream at its decoding stage. Indeed, the Super Resolution algorithms that are categorized in the domain of video post-processing are applied directly on decoded video, and the concept behind their usage consists in displaying video streams that are encoded with a low resolution in higher resolution and with a good visual comfort, notably with a high Peak Signal to Noise Ratio (PSNR).

Thus, by implementing resolution and visual quality increasing techniques such as Super Resolution techniques, a MRF server may avoid to use important bandwidth for users the video streams thereof are displayed with a high resolution and a high visual quality. The network capacity is then saved, which is crucial in case of network congestion. Moreover, the MRF server may also allow users with poor technical capabilities to send video streams with low resolution while being ensured that said video streams will be transmitted to other users with higher resolution and high visual quality.

In particular, Super Resolution techniques are adapted to increase the resolution and the visual quality of a video stream by means of still images with high resolution and high visual quality. These still images are stored in a dictionary while forming a pair of patches with another still image with low resolution, said low resolution image forming notably a smoothed and down sampled version of said high resolution and high visual quality image. Thus, the pair of patches defined by these still images forms metadata that can be exploited to increase the resolution and the visual quality of the video stream. Two types of dictionaries can be distinguished. In particular, an external dictionary comprises prestored pairs of still images that come from multiple video sources or images, said still images being notably decorrelated from the content of the video streams sent by the users to the MRF server.

To obtain better results, it may be advantageous to use an internal dictionary, comprising pairs of reference frames that consist in captures of still images of the video stream itself, said captured still images being sent regularly by the user sending said video stream, notably every two seconds, to update the dictionary by following the changes in the video scenes of said video stream. However, the crucial issue of such MRF servers remain focused on the homogeneity of the resolution and visual quality of the different video streams that are displayed on the screen of a terminal of a user. In particular, the efficiency increasing of such resolution and visual quality increasing algorithms, which results in the PSNR of the super resolved images at a certain level, is obtained at cost of bandwidth consumption augmentation for sending the new additional captured reference frames. Then, some trade-off is required between the quality of the resolution and visual quality reconstruction and the transmission adaptation of reference frames, and fixing a periodic dictionary update time may be not good enough.

Currently, there exist no satisfying solution to maintain a fair quality between users that experiment limited and time variable capacity network accesses, various technical capabilities and whose video streams are displayed at different resolution and visual quality levels for a given video conference display mode. US patent application publication US2011/0310217 A1 relates to the generation and delivery of key frames to clients of a video conference in response to a need for a synchronization point. The article "Video super-resolution via sparse combinations of key-frame patches in a compression context" by Bevilacqua et al., 2013-12-08, 2013 PICTURE CODING SYMPOSIUM (PCS), IEEE, pages 337-340, presents a super-resolution method for upscaling low-resolution video sequences, that relies on the presence of periodic high-resolution key frames.

The invention aims to improve the prior art by proposing a process that controls and adjusts over the time resolution and visual quality of the video streams of each user, so as to guarantee a good resolution and visual quality of each video streams displayed on a screen while allowing to save the network capabilities.

For that purpose, and according to a first aspect, the invention relates to a process for increasing the resolution and the visual quality of video streams that are exchanged between users connected through their terminals to a video conference service, each user sending through his terminal a video stream and receiving on his terminal video streams of at least one other user connected to said video conference service, a user further sending to a dictionary through his terminal at a given rate reference frames corresponding to snapshots of his video stream that are encoded with a high resolution and a high visual quality, the resolution and the visual quality of said video stream being increased by means of a Super Resolution algorithm adapted to extract and use information from said reference frames to build an enhanced video stream to be sent to other users connected to said service, said process further providing for updating the rate for sending reference frames of a video stream upon detection of a variation in said video stream.

According to a second aspect, the invention relates to a system for increasing the resolution and the visual quality of video streams that are sent through the terminal of a user connected to a video conference service, said system comprising:
- a dictionary for receiving from said user at a given rate reference frames corresponding to snapshots of the video stream that are encoded with a high resolution and a high visual quality;
- a module for increasing the resolution and the visual quality of the video stream of said user by means of a Super Resolution algorithm adapted to extract and use information from said reference frames to build an enhanced video stream to be sent to at least one other user connected to said video conference service;
said system further comprising at least a module for detecting a variation in said video stream and for updating the rate for sending reference frames of said video stream upon such a detection.

According to a third aspect, the invention relates to a terminal comprising means for allowing a user to connect to a video conference service, said terminal comprising means for sending a video stream to be received by at least one other user connected to said service and means for receiving video streams of at least one other user connected to said service, said terminal further comprising such a system.

According to a fourth aspect, the invention relates to a server for providing a video conference service to users connected with their terminals to said service, each user sending through his terminal a video stream to said server and receiving on his terminal video streams of at least one other user connected to said video conference service, said server comprising:
- a device for increasing the resolution and the visual quality of videos streams, said device comprising a dictionary for receiving from a user at a given rate reference frames corresponding to snapshots of the video stream of said user that are encoded with a high resolution and a high visual quality, said device further comprising means for implementing a Super Resolution algorithm adapted to extract and use information from said reference frames to increase the resolution and the visual quality of the video stream of said user to build an enhanced video stream to be sent to other users;
- a device comprising means for detecting a variation in the video stream and means for updating the rate for sending reference frames of said video stream upon such a detection.

According to a fifth aspect, the invention relates to a terminal comprising means for allowing a user to connect to a video conference service, said terminal comprising means for sending a video stream of said user and means for receiving video streams of at least one other user connected to said service, said terminal further comprising:
- means for sending at a given rate reference frames corresponding to snapshots of the video stream that are encoded with a high resolution and a high visual quality, so that the resolution and the visual quality of said video stream will be increased by means of said reference frames to
build an enhanced video stream to be sent to other users of said service; said terminal further comprising means for sending VQA data of the video stream, so that the rate for sending said reference frames will be updated upon estimation of the visual quality of the enhanced video stream by means of at least said VQA data and the and visual quality of the video stream.

According to a sixth aspect, the invention relates to a computer program adapted to perform such a process.

According to a seventh aspect, the invention relates to a computer readable storage medium comprising instructions to cause a data processing apparatus to carry out such a process.

Other aspects and advantages of the invention will become apparent in the following description made with reference to the appended figures, wherein:
- figure 1 represents schematically a terminal and a system comprising means for implementing a process according to the invention;
- figure 2 represents schematically a server to which several terminal are connected, said server comprising means for implementing a process according to the invention.

In relation to those figures, a process for increasing the resolution and the visual quality of video streams 1, 1 a, 1 b, 1 c that are exchanged between users connected through their terminals 2, 2a, 2b, 2c to a video conference service, such as a system 4 and a terminal comprising such a system 4, as well as a server 3 and a terminal 2, 2c comprising means for implementing such a process, would be described below.

In particular, the process can be performed by an adapted computer program, or by a computer readable storage medium comprising instructions to cause a data processing apparatus to carry out said process.

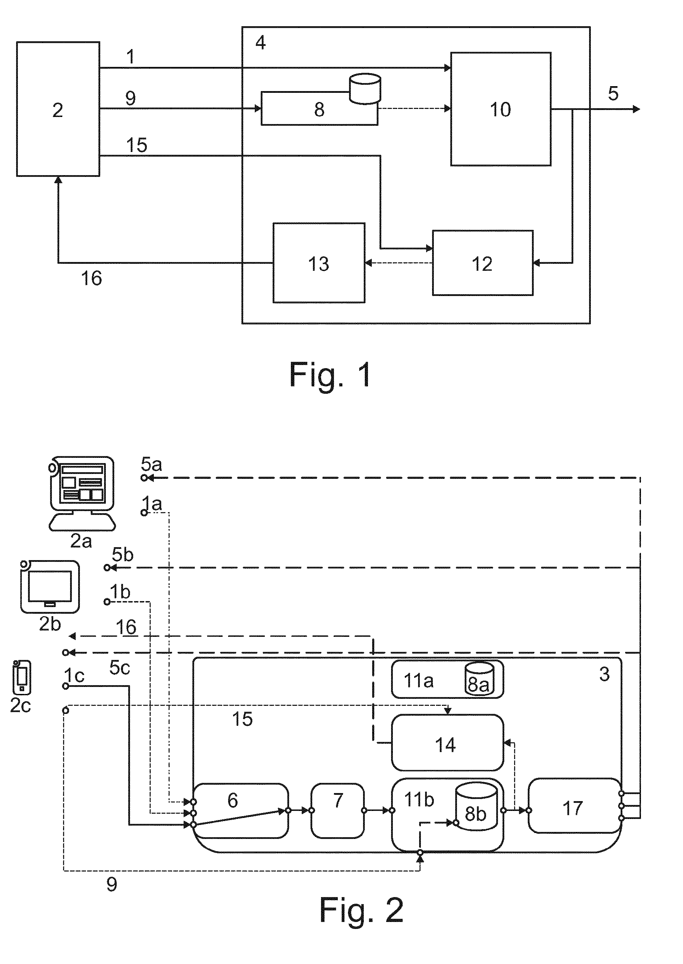

Terminals 2, 2a, 2b, 2c comprise means for allowing their users to connect to a video conference service, notably to a server 3 providing such a video conference service (figure 2), such as means for sending a video stream 1, 1 a, 1 b, 1 c that comprises notably a video capture of said user himself, and means for receiving video streams of at least one other user connected to said service. The terminals 2, 2a, 2b, 2c can notably compress video streams 1, 1 a, 1 b, 1 c into packets according to the Real-time Transport Protocol (RTP).

In relation to figure 2, the server 3 comprises a device 6 for analysing the video streams 1 a, 1 b, 1 c so as to detect the loudest speaking user, such as a decoding device 7 for decoding at least one video stream 1 a, 1 b, 1 c, notably only the video stream 1 c of the loudest speaking user, which uses the smartphone 2c, so that the video streams 5a, 5b, 5c sent back to users will be built according to only said video stream. The decoding device 7 can notably decode the video stream 1 c into a common format such as the YUV format.

Moreover, in relation to both figures, the process provides that the user of the terminal 2, 2c sends to a dictionary 8, 8b through said terminal at a given reference frames of his video stream 1 c. To do so, the terminal 2, 2c comprises means for sending at a given rate such reference frames of his video stream 1, 1 c. In particular, the terminal 2, 2c can compress the reference frames into RTP packets and send said packets into a message 9, said terminal further using RTP timestamps for synchronization of said packets with the packets of the video stream 1 c.

Reference frames corresponds notably to snapshots of the video stream 1, 1 c that are encoded with a high resolution and a high visual quality. To do so, the terminal 2, 2c comprises dedicated means for capturing snapshots of the video stream 1, 1 c, such as a camera application adapted to do such a capture for providing reference frames with a high resolution and a high visual quality.

In particular, the process provides for increasing the resolution and the visual quality of the video stream 1, 1 c by means of the reference frames, especially by means of a Super Resolution algorithm adapted to extract and use information from said reference frames, so as to build an enhanced video stream 5a, 5b, 5c to be sent to other users connected to the video conference service through their terminals 2a, 2b.

To do so, in relation to figure 1, the terminal 2 sends the video stream 1 and the message 9 comprising the reference frames to a dedicated system 4 for increasing the resolution and the visual quality of video streams 1. This system 4 can be implemented into a server providing the video conference service, or into the terminal of another user connected to said video conference service (not shown), so that said system will increase the resolution and the visual quality of the video stream 1 received by said terminal of said another user to build locally the enhanced video stream 5 for said another user.

The system 4 comprises notably a dictionary 8 for receiving the message 9 containing the reference frames, such as a module 10 for increasing the resolution and the visual quality of the video stream 1 by means of a Super Resolution algorithm adapted to extract and use information from said reference frames to build the enhanced video stream 5.

In relation to figure 2, the server 3 comprises a device 11 b for increasing the resolution and the visual quality of the video streams 1 a, 1 b, 1 c, said device comprising a dictionary 8b for receiving from a user at a given rate such reference frames of his video stream 1 c, such as means for implementing a Super Resolution algorithm adapted to extract and use information from said reference frames to increase the resolution and the visual quality of said video stream to build an enhanced video stream 5a, 5b, 5c to be sent to other users.

The server 3 also comprises another resolution and visual quality increasing device 11 a that comprises another dictionary 8a for storing various still images with high resolution and high visual quality, said still images being notably decorrelated from the contents of the video streams 1 a, 1 b, 1 c sent by users.

The use of such an increasing device 11 a gives good results for video reconstruction and can notably be proposed to users using terminals 2a, 2b, 2c the technical capabilities thereof are not sufficient for sending high resolution and visual quality snapshots of their video streams 1 a, 1 b, 1 c.

In relation to figure 2, the terminals 2a, 2b of other users, contrary to the terminal 2c of the user sending the video stream 1 c, are not adapted for sending high resolution and visual quality snapshots, so that, when one of said users becomes the loudest speaking user, his respective video stream 1 a, 1 b will be processed by the increasing device 11 a that uses prestored still images that are decorrelated from said video stream to build the enhanced video stream 5a, 5b, 5c to be sent to other users.

Moreover, the server 3 comprises an encoding device 17 for encoding the enhanced video stream 5a, 5b, 5c, for example by compressing it into packets according to the RTP protocol, and for sending said enhanced video stream in said compressed format to the terminals 2a, 2b, 2c.

The process further provides for updating the rate for sending reference frames of the video stream 1, 1 c upon detection of a variation in said video stream. To do so, the system 4 of figure 1 comprises at least a module 12, 13 for updating the rate for sending reference frames as such, and the server of figure 2 comprises a device 14 for updating the rate for sending reference frames as such.

In particular, the process provides for sending by the terminal 2, 2c Video Quality Assessment (VQA) data of the video stream 1, 1 c, and for estimating the visual quality of the enhanced video stream 5, 5a, 5b, 5c according at least to said VQA data and the visual quality of the video stream 1, 1 c to detect a variation in the visual quality of said enhanced video stream, the rate for sending reference frames of said video stream being updated upon such a detection.

To do so, the terminal 2, 2c comprises means for sending such VQA data to the system 4 (figure 1) or to the server 3 (figure 2).

The VQA data can be notably snapshots with a high resolution and a high visual quality of the video stream 1, 1 c and/or information extracted from such snapshots, and can also contribute to refresh the dictionary 8 if they are such snapshots.

Moreover, the terminal 2, 2c can compress the VQA data into transport packets, as for example according to the RTP protocol, and send a message 15 comprising said packets at a given rate that is defined during the connection of the user to the video conference service.

In relation to figure 1, the system 4 comprises a VQA calculation module 12 comprising means for receiving the message 15 containing the VQA data of the video stream 1, such as means for estimating the visual quality of the enhanced video stream 5 according at least to said VQA data and the visual quality of the video stream 1, said visual quality being notably used by means of a snapshot with standard resolution of the video stream 1 that is synchronised with said VQA data.

In relation to figure 2, the device 14 comprises means for receiving and uncompressing the message 15 containing the VQA data of the video stream 1 c, such as means to perform the estimation of the visual quality of the enhanced video stream 5a, 5b, 5c from a snapshot with standard resolution of the initial video stream 1 c that is synchronised with VQA data comprising notably snapshots with high resolution and visual quality of said video stream.

The VQA calculation module 12 (figure 1) or the device 14 (figure 2) may use any full or partially full reference VQA method, as for example full VQA methods such as Peak Signal to Noise Ratio (PSNR) measurement techniques or Structural Similarity (SSIM) measurement techniques, the choice of the VQA method depending on the type of VQA data, i.e. if said data is a snapshot of the video stream 1 or information extracted from such a snapshot. In particular, the VQA calculation module 12 can implement a no-reference VQA method, such as the method described in the article "A No-Reference Perceptual Blur Metric" (P. Marziliano, F. Dufaux, S. Winkler and T. Ebrahimi, ICIP, 2002), so as to provide an additional estimation of the visual quality of the enhanced video stream 5 between two consecutive snapshots used as VQA data.

Moreover, on the figure 1, the system 4 comprises a decision module 13 comprising means for detecting a variation in the visual quality of the enhanced video stream 5 provided by the VQA calculation module 12, such as means for updating the rate for sending reference frames upon such a detection. In the same way, on the figure 2, the device 14 comprises means for detecting such a variation and means for updating the rate for sending reference frames as such.

The process can notably provide for comparing the visual quality of the enhanced video stream 5, 5a, 5b, 5c to a predetermined threshold value, as for example a 33 dB (decibel) value of PSNR ratio, and for updating the rate for sending key frames according to said comparison. To do so, the decision module 13 (figure 1) and the device 14 (figure 2) are adapted to do such a comparison and to update the rate for sending reference frames as such.

More precisely, the process can provide for increasing - respectively decreasing - the rate for sending reference frames when the visual quality of the enhanced video stream 5, 5a, 5b, 5c has fallen under - respectively has overcome - the predetermined threshold value, so that the lower the visual quality of the enhanced video stream 5, 5a, 5b, 5c is, the higher the rate for sending reference frames is.

In particular, the decision module 13 and the device 14 can also determine which type of reference frames are selected to refresh the dictionary 8 with respect to the structure of the video stream 1, 1c. For example, when the video stream 1, 1 c is composed of Groups of Pictures (GOP) of 30 frames per second that each start by an I frame followed by P frames, the decision module 13 or the device 14 can decide that the high resolution and visual quality snapshots to be selected as reference frames for the dictionary 8, 8b will be those which are synchronised with the two first frames and the 29^{th} and 30^{th} frames in the GOP of the video stream 1, 1 c, which results into an average rate of 4 reference frames per second.

Alternatively, if the visual quality of the enhanced video stream 5, 5a, 5b, 5c is above the threshold value, for example if said visual quality reach a value of 35 dB of PSNR ratio, the rate for sending reference frames is decreased, for example to 1 reference frame every 10 seconds.

As the visual quality of the enhanced video stream 5, 5a, 5b, 5c can vary a lot over the time, the rate for sending VQA data, which is established during the connection of the user to the service, can also be set to vary according to variations of said visual quality. For example, when the visual quality of the enhanced video stream 5, 5a, 5b, 5c is stable for a while, the rate for sending VQA data can be decreased for example to 1 VQA data every 10 seconds, whereas said rate can be increased for example to 1 VQA data per second when the current visual quality of said enhanced video stream is different from the previous visual qualities of said enhanced video stream.

For triggering the updating of the rate for sending reference frames, the process provides for sending to the terminal 2, 2c of the user sending the video stream 1, 1 c a request message 16. In relation to the figures, the decision module 13 (figure 1) and the device 14 (figure 2) comprise means for sending such a request 16 to the terminal 2, 2c, as for example in the form of a feedback message according to the Real-time Transport Control Protocol (RTCP).

In particular, the request message 16 is controlled by a control decision function implemented into the decision module 13 or the device 14. This message 16 can be either a request for refreshing the dictionary 8, 8b that triggers an immediate sending of reference frame by the terminal 2, 2c, or an indicator of a new value for the rate for sending such reference frames, so as to implement an automatic sending of reference frames by said terminal at said imposed rate.

Moreover, the request message 16 can also concern a need for updating the rate for sending VQA data, especially if the visual quality of the enhanced video stream 5, 5a, 5b, 5c has varied significantly in relation to previous ones.

According to another embodiment, the process can provide for monitoring the video stream 1, 1 c so as to detect a scene change in said video stream, the rate for sending reference frames being updated upon such a detection. Indeed, when there is some change in the scene of the video stream 1, 1 c, the reference frames stored in the dictionary 8 become outdated and the resolution and visual quality of the enhanced video stream 5, 5a, 5b, 5c are decreasing.

Thus, a variation of the video stream 1, 1 c can be detected directly on said video stream, whereas such a variation is detected indirectly by the estimation of the visual quality of the resulting enhanced video stream 5, 5a, 5b, 5c.

To do so, the system 4 of figure 1 can comprise a module (not shown) with means for doing such a scene change detection and means for updating the rate for sending reference frames as such.

In particular, the scene change detection can be done with a method as described with the article "A Robust Scene-Change Detection Method for Video Segmentation" (C-L. Huang and B-Y. Liao, IEEE Transactions on Circuits and Systems For Video Technology, vol. 11, no. 12, December 2001). Moreover, the scene change detection can be done at the variation speed of the video scenes.

Moreover, this module for scene change detection can also comprise means for sending to the terminal 2 a request message for updating the rate for sending reference frames upon such a detection.

In the same way, the server 3 of figure 2 can comprise a device with means for doing such a scene change detection and means for updating the rate for sending reference frames as such. In particular, this device for scene change detection can comprise means for sending to the terminal 2c a request message for updating the rate for sending reference frames upon such a detection.

According to a variant, the terminal 2, 2c comprises means for monitoring the video stream 1, 1 c so as to detect such a scene change and sends a reference frame of said video stream upon such a detection. As such, the rate for sending reference frames is controlled only on the abrupt change of the scene, and the establishment of a signalling channel to carry request messages is avoided.

Thus, the solution proposed offers a good flexibility with parameters for controlling the refresh of the dictionary 8, 8b that can regularly and dynamically be updated, so as to always guarantee the best resolution and visual quality for the enhanced video streams 5, 5a, 5b, 5c and thus for the users to which said video streams will be sent.

Moreover, the solution allows for sparing network resources, since the video streams 1, 1 c are sent with standard resolution and with low bitrate to be processed notably at the side of a MRF server to get enhanced video streams 5, 5a, 5b, 5c to users, and thus while reducing the cost of bandwidth used by the dictionary 8, 8b to its minimal value, so as to guarantee a good quality of the enhanced video streams 5, 5a, 5b, 5c without compromising such network resource spare.

All examples recited in the description and drawings are principally intended expressly to be only for pedagogical purposes to assist the reader in understanding the principles of the invention and the concepts contributed by the inventor(s) to furthering the art, and are to be construed as being without limitation to such specifically recited examples and conditions.

## Claims

1. Process for increasing the resolution and the visual quality of video streams (1, 1 a, 1 b, 1 c) that are exchanged between users connected through their terminals (2, 2a, 2b, 2c) to a video conference service, each user sending through his terminal (2, 2a, 2b, 2c) a video stream (1, 1 a, 1 b, 1 c) and receiving on his terminal (2a, 2b, 2c) video streams (5a, 5b, 5c) of at least one other user connected to said video conference service, a user further sending to a dictionary (8, 8b) through his terminal (2, 2c) at a given rate reference frames corresponding to snapshots of his video stream (1, 1 c) that are encoded with a high resolution and a high visual quality, the resolution and the visual quality of the video stream (1, 1 c) of said user being increased by means of a Super Resolution algorithm adapted to extract and use information from said reference frames to build an enhanced video stream (5, 5a, 5b, 5c) to be sent to other users connected to said service, said process being **characterized in that** it provides for updating the rate for sending reference frames of a video stream (1, 1 c) upon detection of a variation in said video stream.

2. Process according to claim 1, **characterised in that** it provides for sending a request message (16) to the terminal (2, 2c) of the user sending the video stream (1, 1 c) for updating the rate for sending reference frames of said video stream.

3. Process according to claim 1 or 2, **characterized in that** it provides for monitoring the video stream (1, 1 c) so as to detect a scene change in said video stream, the rate for sending reference frames of said video stream being updated upon such a detection.

4. Process according to claim 1 or 2, **characterized in that** it provides for sending by the terminal (2, 2c) Video Quality Assessment (VQA) data of the video stream (1, 1 c) and for estimating the visual quality of the enhanced video stream (5, 5a, 5b, 5c) according at least to said VQA data and the visual quality of the video stream (1, 1 c) to detect a variation in the visual quality of said enhanced video stream, the rate for sending key frames of said video stream being updated upon such a detection.

5. Process according to claim 4, **characterized in that** the visual quality of the enhanced video stream (5, 5a, 5b, 5c) is compared to a predetermined threshold value, the rate for sending key frames being updated according to said comparison.

6. Process according to claim 5, **characterized in that** the rate for sending key frames is increased - respectively decreased - when the visual quality of the enhanced video stream (5, 5a, 5b, 5c) has fallen under - respectively has overcome - the predetermined threshold value.

7. System (4) for increasing the resolution and the visual quality of video streams (1) that are sent through the terminal (2) of a user connected to a video conference service, said system comprising:
- a dictionary (8) for receiving from said user at a given rate reference frames corresponding to snapshots of a video stream (1) of said user that are encoded with a high resolution and a high visual quality;
- a module (10) for increasing the resolution and the visual quality of the video stream (1) of said user by means of a Super Resolution algorithm adapted to extract and use information from said reference frames to build an enhanced video stream (5) to be sent to at least one other user connected to said video conference service;
said system being **characterized in that** it comprises at least a module (12, 13) for detecting a variation in said video stream and for updating the rate for sending reference frames of said video stream upon such a detection.

8. System (4) according to claim 7, **characterized in that** it comprises means for sending a request message (16) to the terminal (2) of the user sending the video stream (1) for updating the rate for sending reference frames of said video stream.

9. System (4) according to claim 7 or 8, **characterized in that** it comprises a module comprising means for monitoring the video stream (1) so as to detect a scene change in said video stream, as well as means for updating the rate for sending reference frames of said video stream upon such a detection.

10. System (4) according to claim 7 or 9, **characterized in that** it comprises a Video Quality Assessment (VQA) calculation module (12) comprising means for receiving from the terminal (2) of the user VQA data of the video stream (1), said VQA calculation module also comprising means for estimating the visual quality of the enhanced video stream (5) according at least to said VQA data and the visual quality of the video stream (1), as well as a decision module (13) comprising means for detecting a variation in the visual quality of said enhanced video stream and means for updating the rate for sending reference frames of said video stream upon such a detection.

11. System (4) according to claim 10, **characterized in that** the decision module (13) is adapted to compare the visual quality of the enhanced video stream (5) provided by the VQA calculation module (12) to a predetermined threshold value and to update the rate for sending reference frames according to said comparison.

12. Terminal comprising means for allowing a user to connect to a video conference service, said terminal comprising means for sending a video stream to be received by at least one other user connected to said service and means for receiving video streams of at least one other user connected to said service, said terminal further comprising a system (4) for increasing the resolution and the visual quality of video streams according to any of claims 7 to 11.

13. Server (3) for providing a video conference service to users connected with their terminals (2a, 2b, 2c) to said service, each user sending through his terminal (2a, 2b, 2c) a video stream (1 a, 1 b, 1 c) to said server and receiving on his terminal video streams (5a, 5b, 5c) of at least one other user connected to said video conference service, said server comprising:
- a device (11 b) for increasing the resolution and the visual quality of videos streams (1c), said device comprising a dictionary (8b) for receiving from a user at a given rate reference frames corresponding to snapshots of the video stream (1 c) of said user that are encoded with a high resolution and a high visual quality, said device further comprising means for implementing a Super Resolution algorithm adapted to extract and use information from said reference frames to increase the resolution and the visual quality of the video stream (1c) of said user to build an enhanced video stream (5a, 5b, 5c) to be sent to other users; said server being **characterized in that** it further comprises:
- a device (14) comprising means for detecting a variation in the video stream (1c) and means for updating the rate for sending reference frames of said video stream upon such a detection.

14. Terminal (2, 2c) comprising means for allowing a user to connect to a video conference service, said terminal comprising means for sending a video stream of said user and means for receiving video streams (5c) of at least one other user connected to said service, said terminal further comprising:
- means for sending at a given rate reference frames corresponding to snapshots of the video stream (1, 1c) of said user that are encoded with high
resolution and high visual quality, so that the resolution and the visual quality of said video stream will be enhanced by means of said reference frames to build an enhanced video stream (5, 5a, 5b, 5c) to be sent to other users of said service;
said terminal being **characterized in that** it comprises means for sending Video Quality Assessment (VQA) data of the video stream (1, 1c), so that the rate for sending said reference frames will be updated upon estimation of the visual quality of the enhanced video stream (5, 5a, 5b, 5c) by means of at least said VQA data and the visual quality of the video stream (1, 1c).

15. Terminal (2, 2c) according to claim 14, **characterized in that** it comprises means for monitoring the video stream (1, 1 c) so as to detect a scene change in said video stream, said terminal sending a reference frame of said video stream upon such a detection, so that the rate for sending reference frames of said video stream will be updated upon such a detection.

## Patentansprüche

1. Ein Verfahren zur Verbesserung der Auflösung und der Bildqualität von Videostreams (1, 1 a, 1b, 1c), die zwischen Benutzern, die über ihre Terminals (2, 2a, 2b, 2c) mit einem Videokonferenz-Service verbunden sind, ausgetauscht werden, wobei jeder Benutzer über sein Terminal (2, 2a, 2b, 2c) einen Videostream (1, 1a, 1b, 1c) sendet sowie auf seinem Terminal (2a, 2b, 2c) Videostreams (5a, 5b, 5c) von mindestens einem weiteren, ebenfalls mit dem besagten Videokonferenz-Service verbundenen Benutzer empfängt und ferner ein Benutzer über sein Terminal (2, 2c) einem Verzeichnis (8, 8b) mit einer vorgegebenen Rate Referenzrahmen sendet, die Snapshots seines Videostreams (1, 1c) entsprechen und die in hoher Auflösung sowie in hoher Bildqualität kodiert sind, wobei die Auflösung und Bildqualität des Videostreams (1, 1c) des besagten Benutzers mithilfe eines Super-Resolution-Algorithmus (Superauflösungs-Algorithmus), der auf die Extraktion und Verwendung von Informationen aus den besagten Referenzrahmen ausgerichtet ist, erhöht werden, mit dem Ziel, einen verbesserten Videostream (5, 5a, 5b, 5c) zu erstellen, der an andere mit dem besagten Service verbundene Benutzer gesendet wird, wobei besagtes Verfahren **dadurch gekennzeichnet ist, dass** es die Aktualisierung der Rate für das Senden von Referenzrahmen eines Videostreams (1, 1c) nach Erkennen einer Veränderung in besagtem Videostream ermöglicht.

2. Ein Verfahren nach Anspruch 1, **dadurch gekennzeichnet, dass** es das Senden einer Request-Nachricht (16) an das Terminal (2, 2c) des Benutzers, der den Videostream (1, 1c) sendet, ermöglicht, mit dem Ziel der Aktualisierung der Rate für das Senden von Referenzrahmen des besagten Videostreams.

3. Ein Verfahren nach Anspruch 1 oder 2, **dadurch gekennzeichnet, dass** es eine Überwachung des Videostreams (1, 1c) ermöglicht und folglich ein Bildwechsel in besagtem Videostream erkannt werden kann, wobei die Rate für das Senden von Referenzrahmen des besagten Videostreams im Anschluss an ein derartiges Erkennen aktualisiert wird.

4. Ein Verfahren nach Anspruch 1 oder 2, **dadurch gekennzeichnet, dass** es das Senden von VQA-Daten (VQA = Video Quality Assessment = Beurteilung der Videoqualität) des Videostreams (1, 1c) durch das Terminal (2, 2c) sowie die Beurteilung der Bildqualität des verbesserten Videostreams (5, 5a, 5b, 5c) in Übereinstimmung mit den besagten VQA-Daten und der Bildqualität des Videostreams (1, 1c) als Minimum ermöglicht, mit dem Ziel, eine Veränderung der Bildqualität des besagten verbesserten Videostreams zu erkennen und infolge des Erkennens einer derartigen Veränderung die Rate für das Senden von Keyframes des besagten Videostreams zu aktualisieren.

5. Ein Verfahren nach Anspruch 4, **dadurch gekennzeichnet, dass** die Bildqualität des verbesserten Videostreams (5, 5a, 5b, 5c) mit einem vorgegebenen Grenzwert verglichen wird, wobei die Rate für das Senden von Keyframes entsprechend des Ergebnisses des besagten Vergleichs aktualisiert wird.

6. Ein Verfahren nach Anspruch 5, **dadurch gekennzeichnet, dass** die Rate für das Senden von Keyframes erhöht - bzw. reduziert - wird, wenn die Bildqualität des verbesserten Videostreams (5, 5a, 5b, 5c) unter den vorgegebenen Grenzwert gefallen ist - bzw. diesen vorgegebenen Grenzwert überschritten hat.

7. Ein System (4) zur Verbesserung der Auflösung und der Bildqualität von Videostreams (1), die über das Terminal (2) eines mit einem Videokonferenz-Service verbundenen Benutzers gesendet werden, wobei das besagte System Folgendes umfasst:
- ein Verzeichnis (8) zum Empfangen von Referenzrahmen, die Snapshots eines Videostreams (1) von besagtem Benutzer entsprechen und die in hoher Auflösung und hoher Bildqualität kodiert sind, von besagtem Benutzer mit einer vorgegebenen Rate;
- ein Modul (10) zur Verbesserung der Auflösung und der Bildqualität des Videostreams (1) des besagten Benutzers mittels eines Superauflösungs-Algorithmus, der zur Extraktion und Verwendung von Informationen aus den besagten Referenzrahmen ausgerichtet ist, mit dem Ziel, einen verbesserten Videostream (5) zu erstellen, der an mindestens einen weiteren, mit dem besagten Videokonferenz-Service verbundenen Benutzer gesendet wird;
wobei besagtes System **dadurch gekennzeichnet ist, dass** es mindestens ein Modul (12, 13) zur Erkennung einer Veränderung in besagtem Videostream und zur Aktualisierung der Rate für das Senden von Referenzrahmen des besagten Videostreams nach Erkennen einer derartigen Veränderung umfasst.

8. Ein System (4) nach Anspruch 7, **dadurch gekennzeichnet, dass** es Methoden zum Senden einer Request-Nachricht (16) an das Terminal (2) des den Videostream (1) sendenden Benutzers umfasst, mit dem Ziel, die Rate für das Senden von Referenzrahmen des besagten Videostreams zu aktualisieren.

9. Ein System (4) nach Anspruch 7 oder 8, **dadurch gekennzeichnet, dass** es ein Modul umfasst, welches Methoden zur Überwachung des Videostreams (1) beinhaltet, mithilfe derer sowohl ein. Bildwechsel in besagtem Videostream festgestellt werden kann, als auch Methoden zur Aktualisierung der Rate für das Senden von Referenzrahmen des besagten Videostreams im Anschluss an eine derartige Erkennung.

10. Ein System (4) nach Anspruch 7 oder 9, **dadurch gekennzeichnet, dass** es ein VQA-Berechnungsmodul (VQA = Video Quality Assessment = Beurteilung der Videoqualität) (12) umfasst, das Methoden zum Empfangen von VQA-Daten des Videostreams (1) vom Terminal (2) des Benutzers umfasst, wobei das besagte VQA-Berechnungsmodul weiterhin Methoden zur Beurteilung der Bildqualität des verbesserten Videostreams (5) gemäß der besagten VQA-Daten und der Bildqualität des Videostreams (1) als Minimum umfasst, sowie weiterhin **dadurch gekennzeichnet, dass** es ein Entscheidungsmodul (13) umfasst, das Methoden zur Erkennung einer Veränderung in der Bildqualität des besagten Videostreams sowie im Anschluss an das Erkennen einer derartigen Veränderung Methoden zur Aktualisierung der Rate für das Senden von Referenzrahmen des besagten Videostreams umfasst.

11. Ein System (4) nach Anspruch 10, **dadurch gekennzeichnet, dass** das Entscheidungsmodul (13) darauf ausgerichtet ist, die Bildqualität des vom VQA-Berechnungsmodul (12) bereitgestellten verbesserten Videostreams (5) mit einem vorgegebenen Grenzwert zu vergleichen und die Rate für das Senden von Referenzrahmen entsprechend den Ergebnissen dieses Vergleichs anzupassen.

12. Ein Terminal, das Methoden bereitstellt, die es einem Benutzer ermöglichen, eine Verbindung zu einem Videokonferenz-Service herzustellen, wobei besagtes Terminal über Methoden zum Senden eines Videostreams, der von mindestens einem weiteren mit besagtem Service verbundenen Benutzer empfangen wird, sowie Methoden zum Empfangen von Videostreams von mindestens einem weiteren, ebenfalls mit besagtem Service verbundenen Benutzer umfasst, und wobei besagtes Terminal ferner ein System (4) zur Verbesserung der Auflösung und der Bildqualität des Videostreams gemäß eines beliebigen der Ansprüche 7 bis 11 umfasst.

13. Ein Server (3) zur Bereitstellung eines Videokonferenz-Services für Benutzer, die über ihre Terminals (2a, 2b, 2c) mit besagtem Service verbunden sind, wobei jeder Benutzer über sein Terminal (2a, 2b, 2c) einen Videostream (1a, 1b, 1c) an besagten Server sendet und auf seinem Terminal Videostreams (5a, 5b, 5c) von mindestens einem weiteren, ebenfalls mit besagtem Videokonferenz-Service verbundenen Benutzer empfängt, wobei besagter Server Folgendes umfasst:
- ein Gerät (11b) zur Verbesserung der Auflösung und der Bildqualität von Videostreams (1c), wobei das besagte Gerät ein Verzeichnis (8b) zum Empfangen von Referenzrahmen umfasst, die Snapshots des Videostreams (1c) von besagtem Benutzer entsprechen und die in hoher Auflösung und hoher Bildqualität kodiert sind, von besagtem Benutzer mit einer vorgegebenen Rate, wobei das besagte Gerät weiterhin Mittel zur Implementierung eines Superauflösungs-Algorithmus, der auf die Extraktion und Verwendung von Informationen aus den besagten Referenzrahmen ausgerichtet ist, mit dem Ziel, die Auflösung und die Bildqualität des Videostreams (1c) von besagtem Benutzer zu verbessern, um einen verbesserten Videostream (5a, 5b, 5c) zu erstellen, der an andere Benutzer gesendet wird;
wobei besagter Server **dadurch gekennzeichnet ist, dass** er weiterhin Folgendes umfasst:
- ein Gerät (14), das Methoden zur Erkennung einer Veränderung im Videostream (1 c) sowie Methoden zur Aktualisierung der Rate für das Senden von Referenzrahmen des besagten Videostreams im Anschluss an das Erkennen einer derartigen Veränderung umfasst.

14. Ein Terminal (2, 2c), das Methoden umfasst, die es einem Benutzer ermöglichen, eine Verbindung zu einem Videokonferenz-Service herzustellen, wobei das besagte Terminal Methoden zum Senden eines Videostreams von besagtem Benutzer sowie Methoden zum Empfangen von Videostreams (5c) durch mindestens einen weiteren, ebenfalls mit dem besagten Service verbundenen Benutzer umfasst, und wobei das besagte Terminal weiterhin Folgendes umfasst:
- Methoden zum Senden von Referenzrahmen, die Snapshots des Videostreams (1, 1 c) von besagtem Benutzer entsprechen und die in hoher Auflösung und hoher Bildqualität kodiert sind, von besagtem Benutzer mit einer vorgegebenen Rate, mit dem Ziel, die Auflösung und die Bildqualität des besagten Videostreams mithilfe der besagten Referenzrahmen zu verbessern, um einen verbesserten Videostream (5, 5a, 5b, 5c) zu erstellen, der an weitere Benutzer des besagten Service gesendet wird;
wobei besagtes Terminal **dadurch gekennzeichnet ist, dass** es Methoden zum Senden von VQA-Daten (Daten zur Beurteilung der Videoqualität) des Videostreams (1, 1c) umfasst, mit dem Ziel, die Rate für das Senden der besagten Referenzrahmen nach erfolgter Beurteilung der Bildqualität des verbesserten Videostreams (5, 5a, 5b, 5c) mithilfe der besagten VQA-Daten und der Bildqualität des Videostreams (1, 1c) als Minimum zu aktualisieren.

15. Ein Terminal (2, 2c) nach Anspruch 14, **dadurch gekennzeichnet, dass** es Methoden zur Überwachung des Videostreams (1, 1c) umfasst, mit dem Ziel, einen Bildwechsel in besagtem Videostream zu erkennen, wobei besagtes Terminal nach Erkennen einer derartigen Veränderung einen Referenzrahmen des besagten Videostreams sendet, mit dem Ziel, die Rate für das Senden von Referenzrahmen des besagten Videostreams nach Erkennen einer derartigen Veränderung zu aktualisieren.

## Revendications

1. Procédé destiné à augmenter la résolution et la qualité visuelle de flux vidéo (1, 1 a, 1 b, 1c) qui sont échangés entre des utilisateurs connectés par l'intermédiaire de leur terminal (2, 2a, 2b, 2c) à un service de vidéoconférence, chaque utilisateur envoyant par l'intermédiaire de son terminal (2, 2a, 2b, 2c) un flux vidéo (1, 1a, 1b, 1c) et recevant sur son terminal (2a, 2b, 2c) des flux vidéo (5a, 5b, 5c) d'au moins un autre utilisateur connecté audit service de vidéoconférence, un utilisateur envoyant en outre à un dictionnaire (8, 8b) par l'intermédiaire de son terminal (2, 2c) à un débit donné des trames de référence correspondant à des instantanés de son flux vidéo (1, 1 c) qui sont encodés avec une résolution élevée et une qualité visuelle élevée, la résolution et la qualité visuelle dudit flux vidéo (1, 1c) dudit utilisateur étant augmentées au moyen d'un algorithme de Super Résolution adapté pour extraire et utiliser des informations à partir desdites trames de référence pour construire un flux vidéo amélioré (5, 5a, 5b, 5c) à envoyer à d'autres utilisateurs connectés audit service, ledit procédé étant **caractérisé en ce qu'**il prévoit la mise à jour du débit pour envoyer des trames de référence d'un flux vidéo (1, 1c) lors de la détection d'une variation dans ledit flux vidéo.

2. Procédé selon la revendication 1, **caractérisé en ce qu'**il prévoit l'envoi d'un message de demande (16) au terminal (2, 2c) de l'utilisateur envoyant le flux vidéo (1, 1c) pour mettre à jour le débit pour envoyer des trames de référence dudit flux vidéo.

3. Procédé selon la revendication 1 ou 2, **caractérisé en ce qu'**il prévoit la surveillance du flux vidéo (1, 1c) afin de détecter un changement de scène dans ledit flux vidéo, le débit pour envoyer des trames de référence dudit flux vidéo étant mis à jour lors d'une telle détection.

4. Procédé selon la revendication 1 ou 2, **caractérisé en ce qu'**il prévoit l'envoi par le terminal (2, 2c) de données d'Evaluation de la qualité vidéo (VQA) du flux vidéo (1, 1c) et l'estimation de la qualité visuelle du flux vidéo amélioré (5, 5a, 5b, 5c) en fonction au moins desdites données VQA et de la qualité visuelle du flux vidéo (1, 1c) pour détecter une variation dans la qualité visuelle dudit flux vidéo amélioré, le débit pour envoyer des trames clés dudit flux vidéo étant mis à jour lors d'une telle détection.

5. Procédé selon la revendication 4, **caractérisé en ce que** la qualité visuelle du flux vidéo amélioré (5, 5a, 5b, 5c) est comparée à une valeur de seuil prédéterminée, le débit pour envoyer des trames clés étant mis à jour en fonction de ladite comparaison.

6. Procédé selon la revendication 5, **caractérisé en ce que** le débit pour envoyer des trames clés est augmenté - respectivement diminué - lorsque la qualité visuelle du flux vidéo amélioré (5, 5a, 5b, 5c) est tombée sous - respectivement a dépassé - la valeur de seuil prédéterminée.

7. Système (4) destiné à augmenter la résolution et la qualité visuelle de flux vidéo (1) qui sont envoyés par l'intermédiaire du terminal (2) d'un utilisateur connecté à un service de vidéoconférence, ledit système comprenant :
- un dictionnaire (8) pour recevoir en provenance dudit utilisateur à un débit donné des trames de référence correspondant à des instantanés d'un flux vidéo (1) dudit utilisateur qui sont encodés avec une résolution élevée et une qualité visuelle élevée ;
- un module (10) pour augmenter la résolution et la qualité visuelle du flux vidéo (1) dudit utilisateur au moyen d'un algorithme de Super Résolution adapté pour extraire et utiliser des informations à partir desdites trames de référence pour construire un flux vidéo amélioré (5) à envoyer à au moins un autre utilisateur connecté audit service de vidéoconférence,
ledit système étant **caractérisé en ce qu'**il comprend au moins un module (12, 13) pour détecter une variation dans ledit flux vidéo et pour mettre à jour le débit pour envoyer des trames de référence dudit flux vidéo lors d'une telle détection.

8. Système (4) selon la revendication 7, **caractérisé en ce qu'**il comprend des moyens pour envoyer un message de demande (16) au terminal (2) de l'utilisateur envoyant le flux vidéo (1) pour mettre à jour le débit pour envoyer des trames de référence dudit flux vidéo.

9. Système (4) selon la revendication 7 ou 8, **caractérisé en ce qu'**il comprend un module comprenant des moyens pour surveiller le flux vidéo (1) afin de détecter un changement de scène dans ledit flux vidéo, ainsi que des moyens pour mettre à jour le débit pour envoyer des trames de référence dudit flux vidéo lors d'une telle détection.

10. Système (4) selon la revendication 7 ou 9, **caractérisé en ce qu'**il comprend un module de calcul d'Evaluation de la qualité vidéo (VQA) (12) comprenant des moyens pour recevoir en provenance du terminal (2) des données VQA d'utilisateur du flux vidéo (1), ledit module de calcul VQA comprenant également des moyens pour estimer la qualité visuelle du flux vidéo amélioré (5) en fonction au moins desdites données VQA et de la qualité visuelle du flux vidéo (1), ainsi qu'un module de décision (13) comprenant des moyens pour détecter une variation dans la qualité visuelle dudit flux vidéo amélioré et des moyens pour mettre à jour le débit pour envoyer des trames de référence dudit flux vidéo lors d'une telle détection.

11. Système (4) selon la revendication 10, **caractérisé en ce que** le module de décision (13) est adapté pour comparer la qualité visuelle du flux vidéo amélioré (5) fourni par le module de calcul VQA (12) à une valeur de seuil prédéterminée et pour mettre à jour le débit pour envoyer des trames de référence en fonction de ladite comparaison.

12. Terminal comprenant des moyens pour permettre à un utilisateur de se connecter à un service de vidéoconférence, ledit terminal comprenant des moyens pour envoyer un flux vidéo devant être reçu par au moins un autre utilisateur connecté audit service et des moyens pour recevoir des flux vidéo d'au moins un autre utilisateur connecté audit service, ledit terminal comprenant en outre un système (4) pour augmenter la résolution et la qualité visuelle de flux vidéo selon l'une quelconque des revendications 7 à 11.

13. Serveur (3) destiné à fournir un service de vidéoconférence à des utilisateurs connectés avec leur terminal (2a, 2b, 2c) audit service, chaque utilisateur envoyant par l'intermédiaire de son terminal (2a, 2b, 2c) un flux vidéo (1 a, 1 b, 1c) audit serveur et recevant sur son terminal des flux vidéo (5a, 5b, 5c) d'au moins un autre utilisateur connecté audit service de vidéoconférence, ledit serveur comprenant :
- un dispositif (11b) pour augmenter la résolution et la qualité visuelle de flux vidéo (1c), ledit dispositif comprenant un dictionnaire (8b) pour recevoir en provenance d'un utilisateur à un débit donné des trames de référence correspondant à des instantanés du flux vidéo (1c) dudit utilisateur qui sont encodés avec une résolution élevée et une qualité visuelle élevée, ledit dispositif comprenant en outre des moyens pour mettre en oeuvre un algorithme de Super Résolution adapté pour extraire et utiliser des informations à partir desdites trames de référence pour augmenter la résolution et la qualité visuelle du flux vidéo (1c) dudit utilisateur pour construire un flux vidéo amélioré (5a, 5b, 5c) à envoyer à d'autres utilisateurs ;
ledit serveur étant **caractérisé en ce qu'**il comprend en outre :
- un dispositif (14) comprenant des moyens pour détecter une variation dans le flux vidéo (1c) et des moyens pour mettre à jour le débit pour envoyer des trames de référence dudit flux vidéo lors d'une telle détection.

14. Terminal (2, 2c) comprenant des moyens pour permettre à un utilisateur de se connecter à un service de vidéoconférence, ledit terminal comprenant des moyens pour envoyer un flux vidéo dudit utilisateur et des moyens pour recevoir des flux vidéo (5c) d'au moins un autre utilisateur connecté audit service, ledit terminal comprenant en outre :
- des moyens pour envoyer à un débit donné des trames de référence correspondant à des instantanés du flux vidéo (1, 1c) dudit utilisateur qui sont encodés avec une résolution élevée et une qualité visuelle élevée, de sorte que la résolution et la qualité visuelle dudit flux vidéo seront améliorées au moyen desdites trames de référence pour construire un flux vidéo amélioré (5, 5a, 5b, 5c) à envoyer à d'autres utilisateurs dudit service ;
ledit terminal étant caractérisé en qu'il comprend des moyens pour envoyer des données d'Evaluation de la qualité vidéo (VQA) du flux vidéo (1, 1c), de sorte que le débit pour envoyer lesdites trames de référence sera mis à jour lors de l'estimation de la qualité visuelle du flux vidéo amélioré (5, 5a, 5b, 5c) au moyen d'au moins lesdites données VQA et de la qualité visuelle du flux vidéo (1, 1c).

15. Terminal (2, 2c) selon la revendication 14, **caractérisé en ce qu'**il comprend des moyens pour surveiller le flux vidéo (1, 1c) afin de détecter un changement de scène dans ledit flux vidéo, ledit terminal envoyant une trame de référence dudit flux vidéo lors d'une telle détection, de sorte que le débit pour envoyer des trames de référence dudit flux vidéo sera mis à jour lors d'une telle détection.
